# EUROPEAN PATENT SPECIFICATION

(11) **EP 0 792 470 B1**
(45) Date of publication and mention of the grant of the patent: **02.05.2002**
(21) Application number: 95937283.0
(22) Date of filing: 13.11.1995
(51) Int. Cl.: G02B 23/02, G02B 26/08

(54) **ELECTRO-OPTICAL SIGHT**
ELEKTRO-OPTISCHER SUCHER
VISEUR ELECTRO-OPTIQUE

(30) Priority: 15.11.1994 SE 9403923
(43) Date of publication of application: 03.09.1997
(73) Proprietor: SAAB AB, 581 88 Linköping (SE)
(72) Inventor: FREDIN, Per, S-430 50 Källered (SE); SWENSON, Anders, S-582 26 Linköping (SE)
(74) Representative: Lundquist, Arne
(86) International application number: SE9501348
(87) International publication number: WO9615468

(56) References cited:
- US-A- 1 607 688

## Description

The present invention relates to an electro-optical sight for detecting incoming optic radiation, comprising frontal optics through which radiation along the optical axis, the sight line of the sight, passes on its way to platform optics, optically rigidly connected to the frontal optics which guide the incoming radiation further on to a detector unit, in which the incoming radiation is converted to a picture.

Sights of this kind are used particularly in military aircraft and they must in this application fulfill a number of demands. They must combine great deviation with great aperture; furthermore they must have few movable optical components and find room within limited space. A simplified example of an optical instrument with movable first optics and fixed second optics is described as the telescope of US Patent US-1607688. Here the first optics comprise two prisms which can be rotated upon two axes. The object of the present invention is to achieve an electro-optical sight of the kind mentioned in the introduction, which fulfills these demands.

According to the invention as defined in claim 1 such a sight is primarily characterized in that the platform optics are so arranged that through turning about a first axis, yaw axis, and a second axis, pitch axis, they direct the optical axis for forwarding to the detector unit, the radiation being guided through a system of a first, second, third and fourth prism through reflexion, said prisms being mounted in a common structure, which is turnable about the first axis, which coincides with the optical axis, that is said sight line, the first prism being turnable relative to the second prism about the second axis, which constitutes the direction of the optical axis reflected from the first prism.

The optical system is thus divided in three units, which are
- frontal optics working much like a Gallilei telescope, shrinking the ray path to the entrance to
- the platform optics, which guide the ray path further on through an "optical gimbal joint", built of said four prisms, with the mentioned two axes, yaw axis and pitch axis, from which the radiation is forwarded to
- the detector unit with detector optics.

This optical system fulfills the above-mentioned demands, but in order to make reflexion possible in excess of the angle in which total reflexion is obtained in the prisms, these are on the rear side of the partly totally reflecting surfaces coated with specular material.

As will be described in more detail below, it is advantageous that intermediate images in the ray path appear outside the prisms, which can be achieved in that a positive lens function is arranged between any one pair of said four prisms. This positive lens function can be obtained with at least one lens element or in that at least one prism surface is bent.

In an advantageous embodiment of the invention, the radiation is guided from the platform optics further on to shifting optics, which are capable of varying the view field of the sight, preferably between wide angle and tele optics.

The invention shall now be described in more detail, with reference to the accompanying schematic figures, of which
- Figure 1: shows the principal construction of the electro-optical sight;
- Figure 2: shows the principal construction of the platform optics;
- Figure 3: shows "developed" platform optics;
- Figure 4: shows same with a positive lens element for "tele";
- Figure 5: shows "developed" platform optics with a positive lens element for "wide angle";
- Figure 6: shows frontal and platform optics in "tele";
- Figure 7: shows same in wide angle;
- Figure 8: shows in perspective the mechanical structure of the electro-optical sight.

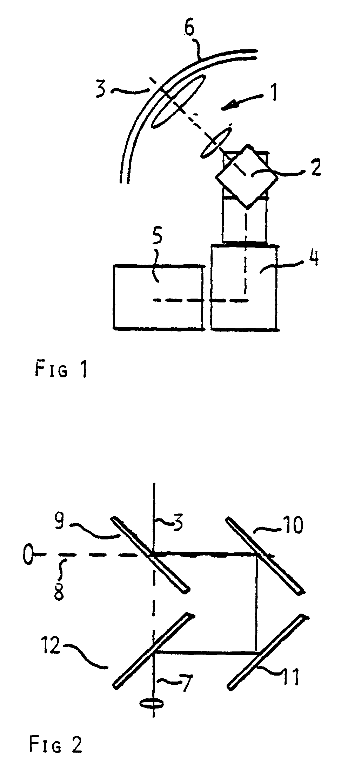

The electro-optical sight according to the invention can in one embodiment be built up as shown in Figure 1. The optical system is in this case divided in four units, that is frontal optics 1, which work much like a Gallilei telescope and shrink the ray path to the consecutive platform optics 2. The frontal optics are movable and follow the sight line 3 of the system when this deviates with the platform. The platform optics 2 that guide the incoming ray path through an "optical gimbal joint", are built of four prisms, and are capable of turning the sight line about two orthogonal axes, here called yaw axis and pitch axis. The ray path from the platform optics is guided further to a unit for shifting optics 4, which is attached to a vehicle or the like, that is fixed to a body, which has as its purpose to shift view field between a small view field, here called "tele", and a large view field, here called "wide angle". In systems without the shifting of view field, the ray path goes directly from the platform optics to the detector unit. After the shifting optics there is a unit for detector optics 5, which likewise is fixed to a body, suitably provided with a rotation prism that compensates for the turning of the sight line, so that: the detected picture becomes fixed. In these optics, the ray path that passed the shifting optics is reproduced. The sight is surrounded by a dome, here suggested by number 6.

The platform optics have been formed with the intent to avoid changing between the driving motors and the sight line. Furthermore, great deviation shall be combined with great apperture. It shall have few movable optical components and be comprised in a small space. Through rotation about said two axes, yaw axis 7 and pitch axis 8, the sight line, that is the optical axis, shall be directed in the desired direction. It is desirable, that it shall be possible to direct the sight line within as great an angular range as possible. The principle is evident from Figure 2, in which it is illustrated with mirrors 9-12. The whole structure is turnable about the yaw axis 7, and the first mirror 9 can additionally be turned about the pitch axis 8. The reflecting surfaces are located mutually so that the sight line after reflexion in the four surfaces becomes mutual with the yaw axis of the platform. In its extension, the yaw axis will intersect the pitch axis in a cross that is mutual with the point of reflexion of the sight line in the first mirror 9 and the bend centre of the dome 6.

The picture of the observed view drawn by the system, will rotate about its central point, which corresponds to the optical axis. How much the picture rotates depends on the setting of the platform in pitch and yaw. This, from a reproduction point of view not desirable rotation will be compensated by a rotation prism in the part fixed to a body of the optical system. Alternatively, the correction of the rotation can be performed with a software-implemented coordinate transformation.

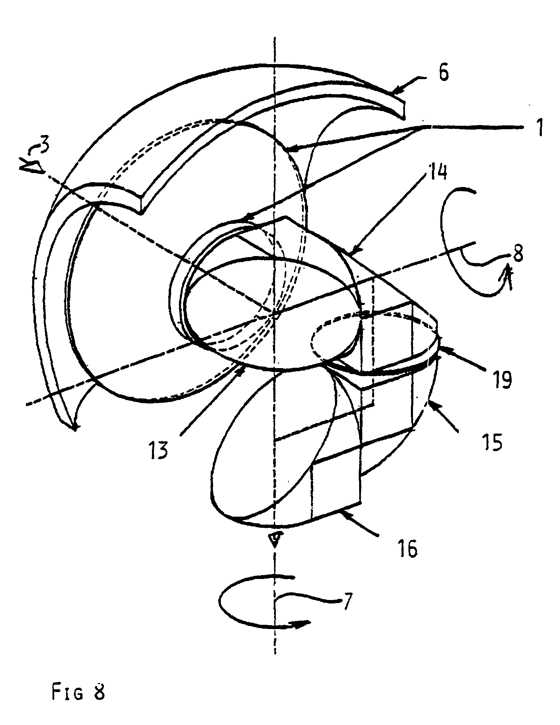

The construction of the electro-optical sight with frontal optics and platform optics comprising four prisms is evident from Figure 8. Here, a first prism is designated by 13, a second one by 14, a third one by 15 and a fourth one by 16.

An advantage with using prisms instead of mirrors is that the angular scattering becomes smaller with diffractive material between the reflecting surfaces instead of air. This is evident from Figure 3, in which "developed" platform optics with the four prisms 13-16 are shown. Focus is designated by number 17 and pupil by 18. By "developed" it is meant that a prism with a mirror plane is represented by a perpendicular block whose length corresponds to the length of the ray path through the prism.

The construction shall be so dimensioned, that the prisms become so big that a possible focus, called intermediate image, shall not lie in an optically diffractive material. Should the system focus on a possible defect in a prism, this would immediately appear as a sharp spot in the resulting picture. An intermediate image shall therefore always lie in air, which can be considered homogenous.

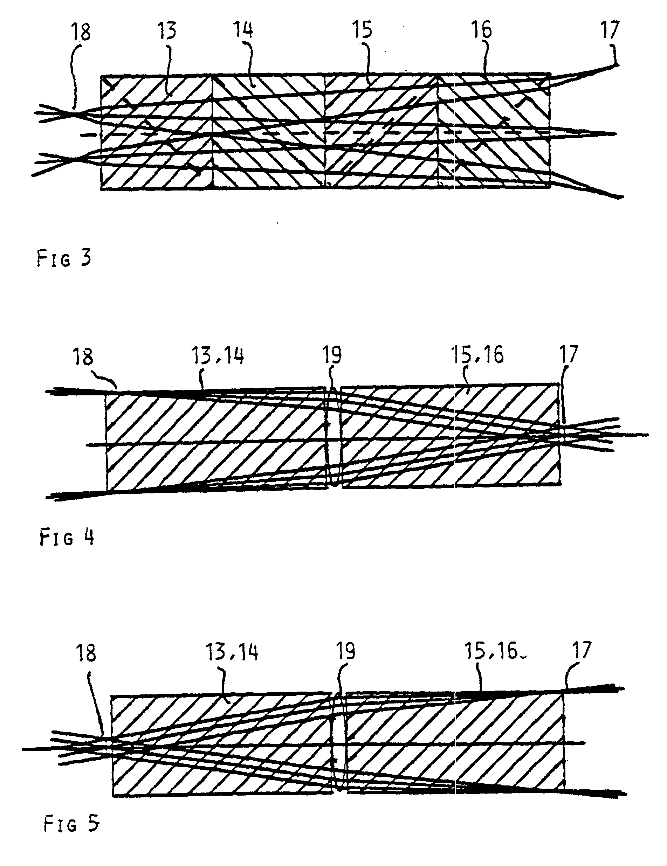

By placing a positive lens function somewhere between two of the four prisms, it can be achieved that at a certain prism size, the intermediate image appears outside the prisms and thereby in air. Such a positive lens effect can be achieved with one or several bent prism surfaces, but in the Figures 4 and 5 a positive lens 19 is shown inserted between the second and third prisms 14 and 15. In Figure 4 the adjacent frontal optics are so formed that the pupil is located immediately by the entrance surface of the first prism 13, and thanks to the positive lens 19, the intermediate image, that is focus, will be located just outside the fourth prism 16. This means "tele design". If the ray path in Figure 4 is reversed, "wide angle design" is obtained, see Figure 5.

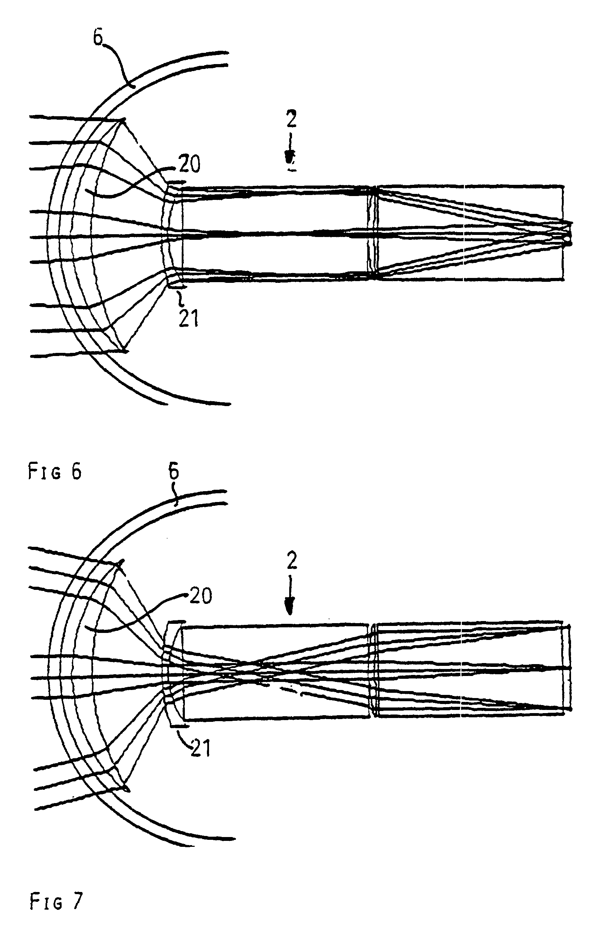

In Figures 6 and 7, two examples are shown on frontal optics and platform optics for "tele" and "wide angle", respectively. The frontal optics should be formed as "telephoto" with great focal distance, that is the optical system shall be shorter than its focal distance. Here, an embodiment is shown with a big positive entrance lens 20 and a smaller negative exit lens 21. The aperture limit for frontal optics is positioned behind the exit lens and thereby in the vicinity of the entrance surface for the first prism 13. In order that the definition of image shall be good, the frontal optics and the platform optics are mutually adjusted. In systems with shifting of view field, such as shown in Figure 1, the frontal optics must be capable of handling both beams of rays with great diameter and small angular scattering, that is "tele", and ray path with small diameter and great angular scattering, that is "wide angle". The shifting of view field takes place as mentioned above in a special unit for shifting optics, which is located fixed to a body.

## Claims

1. An electro-optical sight, for the detection of incoming optical radiation, comprising the combination of
a) frontal optics (1), through which radiation along the optical axis, the sight line of the sight (3), passes on its way to
b) platform optics (2), optically rigidly connected to the frontal optics, which guide the incoming radiation further to
c) a detector unit (5), in which the incoming radiation is converted to a picture,
**characterized in that**
the platform optics (2) are arranged to direct the optical axis for forwarding to the detector unit (5), through turning about a first optical axis, yaw axis (7) and a second axis, pitch axis (8),
in which arrangement
the radiation is guided through a system of a first (13), second (14), third (15) and fourth (16) prism through reflexion,
said prisms being mounted in a common structure, which is turnable about the first axis, which coincides with the optical axis, that is said sight line,
the first prism (13) being turnable relative to the second prism (14) about the second axis,
which constitutes the direction of the optical axis reflected from the first prism.

2. An electro-optical sight according to Claim 1,
**characterized in that**
the prisms on a rear side of respective partly totally reflecting surfaces are coated with specular material in order to make reflexion possible in excess of the angle within which total reflexion is obtained.

3. An electro-optical sight according to Claim 1 or 2,
**characterized in that**
a positive lens function (19) is located between any one pair of said four prisms for an intermediate image to appear outside the prisms.

4. An electro-optical sight according to Claim 3,
**characterized in that**
the positive lens function is achieved with at least one lens element (19).

5. An electro-optical sight according to Claim 3,
**characterized in that** the positive lens function is achieved **in that** at least one prism surface is bent.

6. An electro-optical sight according to any one of Claims 1 to 5,
**characterized in that**
the radiation from the platform optics (2) is forwarded to shifting optics (4), which are capable of varying the view field of the sight, preferably between wide angle and tele optics.

## Patentansprüche

1. Ein elektro-optisches Visier für die Detektierung einfallender optischer Strahlung, bestehend aus der Kombination von
a) einer vorderen Optik (1),
durch welche Strahlung entlang der optischen Achse, das ist die Sichtlinie des Visiers (3), geht auf ihrem Weg zu
b) einer Plattformoptik (2), die optisch starr mit der vorderen Optik verbunden ist und die die einfallende Strahlung weiterleitet zu
c) einer Detektoreinheit (5), in welcher die einfallende Strahlung in ein Bild umgewandelt wird,
**dadurch gekennzeichnet, daß**
die Plattformoptik (2) so angeordnet ist, daß sie die optische Achse für eine Weiterleitung an die Detektoreinheit (5) lenkt, indem sie diese um eine erste, Gierachse (7) genannte optische Achse und um eine zweite, Querachse (8) genannte Achse dreht, in welcher Anordnung
die Strahlung durch Reflexion durch ein aus einem ersten (13), zweiten (14), dritten (15) und vierten (16) Prisma bestehendes System gelenkt wird,
genannte Prismen in einer gemeinsamen Halterung angeordnet sind, welche Halterung um die erste, mit der als genannte Sichtlinie bezeichneten, optischen Achse zusammenfallenden Achse gedreht werden kann,
das erste Prisma (13) im Verhältnis zum zweiten Prisma (14) um die zweite Achse gedreht werden kann,
welche die Richtung der vom ersten Prisma reflektierten, optischen Achse bildet.

2. Ein elektro-optisches Zielgerät gemäß Anspruch 1,
**dadurch gekennzeichnet, daß**
die Prismen auf einer Rückseite der jeweiligen vollständig reflektierenden Flächen mit einem spiegelnden Material beschichtet sind, um eine Reflexion über den Winkel hinaus zu ermöglichen, innerhalb dessen eine vollständige Reflexion erhalten wird.

3. Ein elektro-optisches Zielgerät gemäß Anspruch 1 oder 2,
**dadurch gekennzeichnet, daß**
eine positive Linsenfunktion (19) zwischen einem beliebigen Paar der genannten vier Prismen für ein Zwischenbild, das außerhalb der Prismen erscheinen soll, angeordnet ist.

4. Ein elektro-optisches Zielgerät gemäß Anspruch 3,
**dadurch gekennzeichnet, daß**
die positive Linsenfunktion durch zumindest ein Linsenelement (19) erhalten wird.

5. Ein elektro-optisches Zielgerät gemäß Anspruch 3,
**dadurch gekennzeichnet, daß**
die positive Linsenfunktion dadurch erhalten wird, daß zumindest eine Prismenfläche gebeugt ist.

6. Ein elektro-optisches Zielgerät gemäß Anspruch 1 bis 5,
**dadurch gekennzeichnet, daß**
die Strahlung von der Plattformoptik (2) weitergeleitet wird zu einer Wechseloptik (4), welche die Fähigkeit besitzt, das Sichtfeld des Visiers vorzugsweise zwischen Weitwinkel- und Teleoptik zu verändern.

## Revendications

1. Viseur électro-optique, pour la détection d'un rayonnement optique entrant, comportant la combinaison
a) d'optiques frontaux (1), à travers lesquels un rayonnement le long de l'axe optique, la ligne de visée du viseur (3), passe sur son trajet jusqu'à
b) des optiques de plate-forme (2), connectés rigidement de manière optique aux optiques frontaux, qui guident le rayonnement entrant de plus dans
c) une unité de détecteur (5), dans laquelle le rayonnement entrant est converti en une image,
**caractérisé en ce que**
des optiques de plate-forme (2) sont agencés pour diriger l'axe optique pour l'amener dans l'unité de détecteur (5), en tournant autour d'un premier axe optique, l'axe de lacet (7), et un deuxième axe, l'axe de tangage (8), dans lequel l'agencement le rayonnement est guidé à travers un système constitué d'un premier (13), deuxième (14), troisième (15) et quatrième (16) prismes par une réflexion, lesdits prismes étant montés dans une structure commune, qui peut être tournée autour du premier axe, qui coïncide avec l'axe optique, c'est-à-dire ladite ligne de visée,
le premier prisme (13) pouvant être tourné par rapport au deuxième prisme (14) autour du deuxième axe, qui constitue la direction de l'axe optique réfléchi par le premier prisme.

2. Viseur électro-optique selon la revendication 1, **caractérisé en ce que** les prismes situés sur un côté arrière de surfaces partiellement totalement réfléchissantes respectives sont revêtus d'un matériau spéculaire afin de rendre une réflexion possible en excès de l'angle dans lequel une réflexion totale est obtenue.

3. Viseur électro-optique selon la revendication 1 ou 2, **caractérisé en ce qu'**une fonction de lentille positive (19) est positionnée entre une quelconque paire desdits quatre prismes pour qu'une image intermédiaire apparaisse à l'extérieur des prismes.

4. Viseur électro-optique selon la revendication 3, **caractérisé en ce que** ladite fonction de lentille positive est obtenue à l'aide d'au moins un élément de lentille (19).

5. Viseur électro-optique selon la revendication 3, **caractérisé en ce que** la fonction de lentille positive est obtenue en ce sens qu'au moins une surface de prisme est incurvée.

6. Viseur électro-optique selon l'une quelconque des revendications 1 à 5, **caractérisé en ce que** le rayonnement provenant des optiques de plate-forme (2) est amené dans des optiques de décalage (4), qui sont capables de faire varier le champ de vision du viseur, de préférence entre des optiques grand angle et télé.
